# EUROPEAN PATENT APPLICATION

(11) **EP 2 360 983 A1**
(43) Date of publication of application: **24.08.2011**
(21) Application number: 11000998.2
(22) Date of filing: 08.02.2011
(51) Int. Cl.: H04W 64/00

(54) **Method and system for determining a location of an access point based on association of the access point with a communication device having a known location**

(30) Priority: 12.02.2010 US 304205 P; 26.03.2010 US 748177
(71) Applicant: Broadcom Corporation, Irvine, CA 92617 (US)
(72) Inventor: Karaguz, Jeyhan, Irvine, CA 92606 (US); Buer, Mark, Irvine, CA 92617 (US); Lundgren, David Albert, Mill Valley, CA 94941 (US); Abraham, Charles, Los Gatos, CA 95033 (US); Garrett, David, Tustin, CA 92782 (US); Murray, David, Mission Viejo, CA 92692 (US)
(74) Representative: Jehle, Volker Armin

(57) **Abstract**

A communication device associated with a wireless access point, namely, a WiFi access point or a Bluetooth access point for example, communicates its location information to the wireless access point. The wireless access point determines its own location utilizing the communicated location information. The communicated location information comprises a device location address and/or a GNSS position of the associated communication device. The device address comprises a network accessible address, a device identifier, a telephone number, an IP address, a url and/or ftp location, an e-mail address, and/or an account number that identifies a corresponding location of the communication device. The wireless access point retrieves corresponding device location addresses and/or GNSS positions from a plurality of associated communication devices. The retrieved device location addresses are converted to determine corresponding locations for self-locating the wireless access point. The determined location of the wireless access point is shared with each associated communication device.

## Description

This patent application makes reference to, claims priority to and claims the benefit from United States Provisional Patent Application Serial No. 61/304,205 filed on February 12, 2010.

This application makes reference to:
United States Application Serial No. 12/729,184 filed on March 22, 2010,
United States Application Serial No. 61/303,931 filed on February 12, 2010,
United States Application Serial No. 61/303,975 filed on February 12, 2010,
United States Application Serial No. 61/314,521 filed on March 16, 2010,
United States Application Serial No. 61/305,758 filed on February 18, 2010,
United States Application Serial No. _________ (Attorney Docket No. 21013US02) filed on even date herewith,
United States Application Serial No. _________ (Attorney Docket No. 21015US02) filed on even date herewith,
United States Application Serial No. ________ (Attorney Docket No. 21018US02) filed on even date herewith, and
United States Application Serial No. _________ (Attorney Docket No. 21026US02) filed on even date herewith.

Each of the above stated applications is hereby incorporated herein by reference in its entirety.

### FIELD OF THE INVENTION

Certain embodiments of the invention relate to communication systems. More specifically, certain embodiments of the invention relate to a method and system for determining a location of an access point based on association of the access point with a communication device having a known location.

### BACKGROUND OF THE INVENTION

Location-based services are emerging as a new type of value-added service provided by mobile communication network. Location-based services are mobile services in which the user location information is used in order to enable various location-based applications such as, for example, enhanced 911 (E-911), location-based 411, location-based messaging and/or location-based friend finding services.

The growing market for location-based services causes a great demand for positioning systems with high accuracy. In addition to Global navigation satellite-based systems (GNSS) such as Global Positioning System (GPS), Global Navigation Satellite System (GLONASS), Galileo, and/or Assisted-GNSS (A-GNSS), there are several WiFi positioning systems which allow a cost-effective indoor and outdoor positioning. With increasing regularity, these positioning systems are applied not only for communication but also to locate mobile devices. For example, WiFi positioning systems (WPS) measure received signal-strength (RSS) or signal-to-noise-ratio (SNR) between a mobile device and multiple access points to obtain the mobile device's position.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A method and/or system for determining a location of an access point based on association of the access point with a communication device having a known location, substantially as shown in and/or described in connection with at least one of the figures, as set forth more completely in the claims.
According to an aspect, a method for communication is provided, the method comprising:
performing by one or more processors and/or circuits in a communication device that has created an association with a wireless access point:
   communicating location information of said communication device to said associated wireless access point, wherein said communicated location information of said communication device is utilized by said wireless access point to determine a location of said wireless access point.
Advantageously, said wireless access point is a WiFi access point or a Bluetooth access point.
Advantageously, said communicated location information of said communication device comprises a device location address and/or a Global navigation satellite-based systems (GNSS) position of said communication device.
Advantageously, said device address comprises a network accessible address, a device identifier, a telephone number, an IP address, a url and/or ftp location, an e-mail address, and/or an account number.
Advantageously, said wireless access point retrieves corresponding device location addresses and/or GNSS positions from a plurality of associated communication devices.
Advantageously, said location of said wireless access point is determined based on said retrieved device location addresses and/or GNSS positions from said plurality of associated communication devices.
Advantageously, said wireless access point determines locations corresponding to said retrieved device location addresses.
Advantageously, said location of said wireless access point is determined based on said determined locations corresponding to said retrieved device location addresses, and/or said retrieved GNSS positions.
Advantageously, said determined location of said wireless access point is shared among said plurality of associated communication devices.
Advantageously, said determined location of said wireless access point is shared with an associated communication device not providing corresponding location information to said wireless access point.
According to an aspect, a system for communication comprises:
one or more processors and/or circuits for use in a communication device that has created an association with a wireless access point, said one or more processors and/or circuits being operable to:
   communicate location information of said communication device to said associated wireless access point, wherein said communicated location information of said communication device is utilized by said wireless access point to determine a location of said wireless access point.
Advantageously, said wireless access point is a WiFi access point or a Bluetooth access point.
Advantageously, said communicated location information of said communication device comprises a device location address and/or a Global navigation satellite-based systems (GNSS) position of said communication device.
Advantageously, said device address comprises a network accessible address, a device identifier, a telephone number, an IP address, a url and/or ftp location, an e-mail address, and/or an account number.
Advantageously, said wireless access point retrieves corresponding device location addresses and/or GNSS positions from a plurality of associated communication devices.
Advantageously, said location of said wireless access point is determined based on said retrieved device location addresses and/or GNSS positions from said plurality of associated communication devices.
Advantageously, said wireless access point determines locations corresponding to said retrieved device location addresses.
Advantageously, said location of said wireless access point is determined based on said determined locations corresponding to said retrieved device location addresses, and/or said retrieved GNSS positions.
Advantageously, said determined location of said wireless access point is shared among said plurality of associated communication devices.
Advantageously, said determined location of said wireless access point is shared with an associated communication device not providing corresponding location information to said wireless access point.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a diagram illustrating an exemplary communication system that is operable to determine a location of an access point based on association of the access point with a communication device having a known location, in accordance with an embodiment of the invention.

FIG. 2 is a block diagram illustrating an exemplary access point that is operable to self-locate based on association of the access point with a communication device having a known location, in accordance with an embodiment of the invention.

FIG. 3 is a flow chart illustrating an exemplary procedure that is utilized by an access point to self-locate based on association of the access point with a communication device having a known device location address, in accordance with an embodiment of the invention.

FIG. 4 is a flow chart illustrating an exemplary procedure that is utilized by an access point to self-locate based on association of the access point with a communication device having a known GNSS position, in accordance with an embodiment of the invention.

### DETAILED DESCRIPTION OF THE INVENTION

Certain embodiments of the invention may be found in a method and system for determining a location of an access point based on association of the access point with a communication device having a known location. In various embodiments of the invention, a communication device that is associated with a wireless access point is operable to communicate location information of the communication device to the wireless access point. The wireless access point is operable to determine its own location utilizing the communicated location information of the communication device. The wireless access point may be a WiFi access point or a Bluetooth access point, for example. The communicated location information of the communication device comprises a device location address and/or a GNSS position of the communication device. The device address may comprise a network accessible address, a device identifier, a telephone number, an IP address, a url and/or ftp location, an e-mail address, and/or an account number that may identify a corresponding location of the communication device. The wireless access point may be operable to retrieve corresponding device location addresses and/or GNSS positions from a plurality of associated communication devices. The location of the wireless access point may be determined based on the retrieved device location addresses and/or GNSS positions from the plurality of associated communication devices. The wireless access point may be operable to determine locations corresponding to the retrieved device location addresses such as an IP address. For example, the wireless access point may convert the IP address to a corresponding location (latitude and longitude) using various means such as a location-IP address lookup. The determined locations corresponding to the retrieved device location addresses may be utilized by the wireless access point to determine its own location. The determined location of the wireless access point may be shared among a plurality of associated communication devices even without providing corresponding location information to the wireless access point.

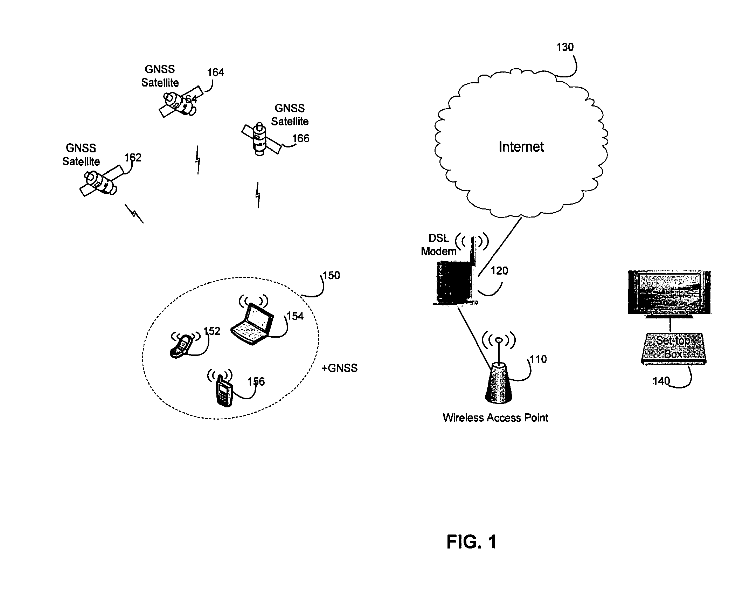

FIG. 1 is a diagram illustrating an exemplary communication system that is operable to determine a location of an access point based on association of the access point with a communication device having a known location, in accordance with an embodiment of the invention. Referring to FIG. 1, there is shown a communication system 100. The communication system 100 comprises a wireless access point 110, a digital subscriber line (DSL) modem 120, the Internet 130, a set-top box 140, a plurality of GNSS enabled mobile devices 150, of which mobile devices 152-156 are illustrated, and GNSS satellites 162-166.

The wireless access point 110 may comprise suitable logic, circuitry, interfaces and/or code that are operable to connect wireless communication devices to a wireless or wired network using Wi-Fi, Bluetooth or related standards or other local area or short range networking technologies. The wireless access point 110 may be configured to function as a central transmitter and receiver of a wireless local network (WLAN).

The wireless access point 110 may be configured to transmit Beacon frames, for example, a few times each second. The transmitted Beacon frames comprise network information such as, for example, Service Set Identifier (SSID), time, capabilities and/or supported rates, which may be utilized by communication devices in proximity, for example, the mobile device 152, to determine whether to associate with the wireless access point 110. In instances where it may be desirable for the mobile device 152 to create an association with the wireless access point 110, an association process may be performed between the wireless access point 110 and the mobile device 152. The association process comprises two steps. In the first step, the wireless access point 110 and the mobile device 152 may mutually authenticate themselves by exchanging Authentication management frames. The mobile device 152 is now authenticated, but unassociated. In the second step, the wireless access point 110 receives an Association Request frame from the mobile device 152. The wireless access point 110 responds with an Association Response frame comprising an Association ID to the mobile device 152. The mobile device 152 is now authenticated and associated.

A communication device such as the mobile device 152 may be authenticated with more than one wireless access points at the same time, but associated with at most one wireless access point such as the wireless access point 110 at any time. Association implies authentication. Data may be exchanged between the wireless access point 110 and a communication device only after the communication device is authenticated and associated with the wireless access point 110. The exchanged data may comprise various data services such like LBS applications. Location information such as the location of the wireless access point 110 may be required for LBS applications such as location based access control. In this regard, the access point 110 may be operable to self-locate based on associations with communication devices such as, for example, the DSL modem 120, the set-top box 140 and/or the mobile devices 152-156, having known locations. The wireless access point 110 may be operable to trace or retrieve location information of associated communication devices. In this regard, the retrieved location information of the associated communication devices may comprise corresponding device location addresses and/or device GNSS positions (latitude and longitude). In this regard, a device location address, as used herein, of a specific communication device comprises, for example, one or more network accessible addresses, device identifiers, telephone numbers, IP addresses, url and ftp locations, e-mail addresses, account numbers and/or other types of device location addresses that may identify a corresponding location of the communication device. In other words, a device location address may be converted into a corresponding location through a location-device location address lookup, for example.

In an exemplary embodiment of the invention, in instances where associated communication devices such as the DSL modem 120 and/or the set-top box 140 have device location addresses such as IP addresses that are known to the wireless access point 110, the known IP addresses may correspond to locations of the DSL modem 120 and/or the set-top box 140. In this regard, the wireless access point 110 may be operable to trace back to the locations of the DSL modem 120 and/or the set-top box 140 according to corresponding known IP addresses. For example, a known IP address of the DSL modem 120 may be converted into a location estimate (latitude and longitude) for the DSL modem 120 through a location-IP address lookup. The wireless access point 110 may utilize the specific locations of the DSL modem 120 and/or the set-top box 140 to determine its own location.

In another exemplary embodiment of the invention, in instances where associated communication devices such as the mobile devices 152-156 are GNSS enabled, GNSS positions of the mobile devices 152-156 may be available. In this regard, the wireless access point 110 may be operable to trace or retrieve the GNSS positions of the mobile devices 152-156 over a time period. The retrieved GNSS positions of the mobile devices 152-156 may be utilized by the wireless access point 110 to determine its own location.

The DSL modem 120 may comprise suitable logic, circuitry, interfaces and/or code that are operable to connect various communication devices such as, for example, the set-top box 140 and/or the mobile devices 152-156, via the wireless access point 110 to the Internet 130. The DSL modem 120 may be operable to route services to an intended communication device such as the set-top box 140 from the Internet 130 via the wireless access point 110. A device address such as an Internet Protocol (IP) address assigned to the DSL modem 120 for communication over the Internet 130 may not change often and normally may be known to the wireless access point 110. In this regard, the location of the DSL modem 120 may be retrieved by tracing back the known IP address of the DSL modem 120. The retrieved location of the DSL modem 120 may be utilized by the wireless access point 110 to determine its own location.

The Internet 130 may comprise suitable devices, circuitry, interfaces and/or code that are operable to support data communication using Internet Protocols (IP). The Internet 130 may assign a unique IP address to each communication device connected to the Internet 130. The assigned IP address corresponds to a specific location where each corresponding communication device is accessing the Internet 130. In instances where communication devices such as, for example, the DSL modem 120 and/or the set-top box 140, are usually powered-on for extended periods of time, the Internet 130 may assign the DSL modem 120 and/or the set-top box 140 with IP addresses that do not change often, for example, static IP addresses or sticky dynamic IP addresses. Normally, the assigned IP addresses to the DSL modem 120 and/or the set-top box 140 are known to the wireless access point 110. In this regard, the location of the DSL modem 120 and/or the set-top box 140 may be retrieved based on the corresponding assigned IP addresses. The retrieved locations of the DSL modem 120 and/or the set-top box 140 may be utilized by the wireless access point 110 to determine its own location. The determined location of the wireless access point 110 may be utilized to support various services, for example, location-based services, provided by the Internet 130 to users such as the set-top box 140 and/or mobile devices 152-156.

The set-top box 140 may comprise suitable logic, circuitry, interfaces and/or code that are operable to acquire desired IP-based services via the wireless access point 110 from a service distributor such as the Internet 130 and deliver the acquired desired IP-services to users in the home. A device location address such as an IP address assigned to the set-top box 140 for communication over the Internet 130 may not change often and normally may be known to the wireless access point 110. In this regard, the location of the set-top box 140 may be retrieved by tracing back the assigned IP address of the set-top box 140. The retrieved location of the set-top box 140 may be utilized by the wireless access point 110 to determine its own location.

A GNSS enabled mobile device such as the mobile device 152 may comprise suitable logic, circuitry, interfaces and/or code that are operable to concurrently receive satellite broadcast signals from GNSS satellites in view such as, for example, the GNSS satellites 162-166, and radio signals over radio channels between the mobile device 152 and the wireless access point 110. The mobile device 152 may take various GNSS measurements such as pseudorange and/or carrier phase on the received GNSS signals to calculate navigation information such as, for example, GNSS position and/or velocity, of the mobile device 152. In this regard, in instances where the mobile device 152 is successfully associated with the wireless access point 110, the mobile device 152 may communicate the calculated GNSS positions to the wireless access point 110. The communicated GNSS positions of the mobile device 152 may be utilized by the wireless access point 152 to determine its own location.

The GNSS satellites 162-166 may comprise suitable logic, circuitry, interfaces and/or code that may be operable to generate and broadcast satellite navigational information. The broadcast satellite navigational information may be retrieved and utilized by the mobile devices 152-156 to calculate navigation information such as, for example, GNSS position and/or velocity, of the mobile devices 152-156. The GNSS satellites 162-166 may comprise GPS, Galileo, and/or GLONASS satellites.

In an exemplary operation, the wireless access point 110 may be operable to communicate data services provided by the Internet 130 via the DSL modem 120 to intended communication devices associated. In instances where device location addresses such as IP addresses used by associated communication devices such as the DSL modem 120 and/or the set-top box 140 are known to the wireless access point 110, corresponding locations of the DSL modem 120 and/or the set-top box 140 may be determined based on corresponding IP addresses. In instances where associated communication devices such as the mobile devices 152-156 have GNSS capability, the wireless access point 110 may be operable to trace or retrieve GNSS positions of the mobile devices 152-156. Locations of associated communication devices such as, for example, the DSL modem 120, the set-top box 140 and/or the mobile devices 152-156, may be utilized by the wireless access point 110 to determine its own location. The wireless access point 110 may be operable to share its own location among a plurality of associated communication devices in proximity even without knowing a device location address and/or a GNSS position of an associated communication device.

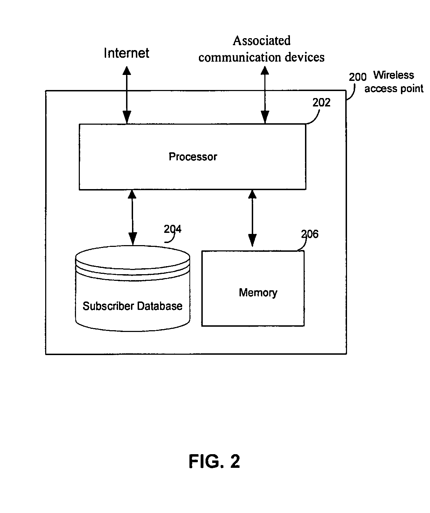

FIG. 2 is a block diagram illustrating an exemplary access point that is operable to self-locate based on association of the access point with a communication device having a known location, in accordance with an embodiment of the invention. Referring to FIG. 2, there is shown a wireless access point 200. The wireless access point 200 comprises a processor 202, a subscriber database and a memory 206.

The processor 202 may comprise suitable logic, circuitry, interfaces and/or code that may be operable to manage and/or control operations of associated device components such as the subscriber database 204 and the memory 206. For example, the processor 202 may maintain the subscriber database 204 to update association information between the wireless access point 200 and local communication devices such as the DSL modem 130, the set-top box 140, and/or the GNSS enabled mobile devices 150. The processor 202 may be operable to trace and/or retrieve location information of communication devices associated with the wireless access point 200. In this regard, the retrieved location information of the associated communication devices may comprise, for example, device location addresses and/or GNSS positions of the associated communication devices. In instances where the retrieved location information of an associated communication device such as the DSL modem 130 and/or the set-top box 140 is a device location address such as an IP address, the processor 202 may be configured to convert or transform the retrieved device location address to a corresponding location of the DSL modem 130 and/or the set-top box 140. The resulting locations of the associated communication devices may be utilized by the wireless access point 200 to calculate its own location.

The subscriber database 204 may comprise suitable logic, circuitry, interfaces and/or code that may be operable to record and/or store information of communication devices associated with the wireless access point 200. For example, an associated communication device may be indexed in the subscriber database 204 by its corresponding location information such as, for example, a device location address and/or a device GNSS position.

The memory 206 may comprise suitable logic, circuitry, interfaces and/or code that may be operable to store information such as executable instructions and data that may be utilized by the processor 202 and/or other device components such as, for example, the subscriber database 204. The memory 206 may comprise RAM, ROM, low latency nonvolatile memory such as flash memory and/or other suitable electronic data storage.

In an exemplary operation, the processor 202 may be operable to control operations of device components such as, for example, the subscriber database 204. The subscriber database 204 may be instructed by the processor 202 to record and store information of communication devices having associations with the wireless access point 200. The associated communication devices may be indexed or stamped utilizing corresponding location information such as device location addresses and device GNSS positions. The processor 202 may be operable to utilize the device location addresses and device GNSS positions of corresponding associated communication devices to determine its own location.

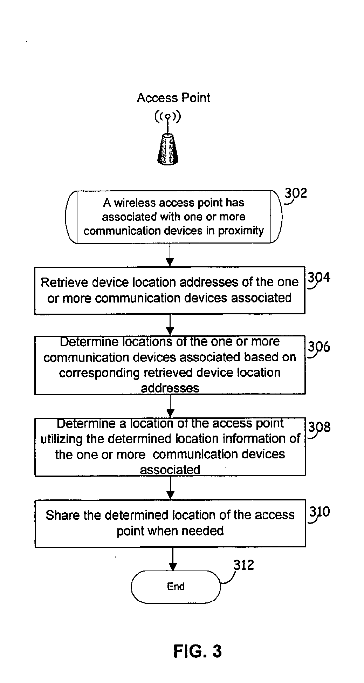

FIG. 3 is a flow chart illustrating an exemplary procedure that is utilized by an access point to self-locate based on association of the access point with a communication device having a known device location address, in accordance with an embodiment of the invention. Referring to FIG. 3, the exemplary steps may start with step 302. In step 302, the wireless access point 200 may an association with one or more communication devices in proximity, for example, the DSL modem 120 and the mobile devices 152-156. In step 304, the processor 202 may be operable to communicate with the associated communication devices for retrieving corresponding device location addresses. The retrieved device location addresses may comprise, for example, one or more network accessible addresses, device identifiers, telephone numbers, IP addresses, url and ftp locations, e-mail addresses, account numbers and/or other types of device location addresses that may identify corresponding locations of the associated communication devices. In step 306, the processor 202 may be operable to determine location information of the associated communication devices by converting or transforming the retrieved device location addresses to corresponding locations. In step 308, the processor 202 may be operable to determine its own location utilizing the determined locations of the one or more associated communication devices. In step 310, the wireless access point 200 may share its location with a plurality of associated communication devices when needed even without knowing a device location address and/or a GNSS position of an associated communication device. The exemplary steps may end with step 312.

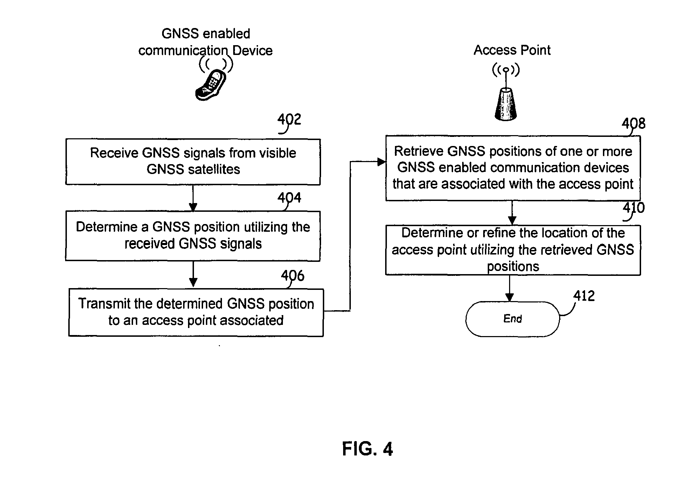

FIG. 4 is a flow chart illustrating an exemplary procedure that is utilized by an access point to self-locate based on association of the access point with a communication device having a known GNSS position, in accordance with an embodiment of the invention. Referring to FIG. 4, the exemplary steps may start with step 402. In step 402, a GNSS capable mobile device such as the mobile device 152 that is associated with the wireless access point 200 may receive GNSS signals from visible GNSS satellites 162-166. In step 404, the mobile device 152 may be operable to utilize the received GNSS signals to determine a GNSS position of the mobile device 152. In step 406, the mobile device 152 may transmit its determined GNSS position to the wireless access point 200. In step 408, the wireless access point 200 may be configured to trace and retrieve GNSS positions of a plurality of associated communication devices. In step 410, the wireless access point 200 may be operable to determine or refine its own location utilizing the retrieved GNSS positions of the plurality of associated communication devices. The exemplary steps may end in step 412.

In various exemplary aspects of the method and system for a method and system for determining a location of an access point based on association of the access point with a communication device having a known location, as described with respect to FIG. 1 through FIG. 4, a communication device such as the DSL modem 130 and/or the mobile device 152 that is associated with the wireless access point 200 may be operable to communicate location information of the communication device to the wireless access point 200. The wireless access point 200 may be operable to determine its own location utilizing the communicated location information of the associated communication device. The wireless access point 200 may be a WiFi access point or a Bluetooth access point. The communicated location information of the communication device comprises a device location address and/or a GNSS position of the communication device. The device address may comprise a network accessible address, a device identifier, a telephone number, an IP address, a url and/or ftp location, an e-mail address, and/or an account number that may identify a corresponding location of the communication device. The wireless access point 200 may be operable to retrieve corresponding device location addresses and/or GNSS positions from a plurality of associated communication devices such as, for example, the DSL modem 130, the set-top box 140 and/or the mobile devices 152-156. The location of the wireless access point 200 may be determined based on the retrieved device location addresses and/or GNSS positions from the plurality of associated communication devices. The wireless access point 200 may be operable to determine locations corresponding to the retrieved device location addresses such as an IP address of the DEL modem 130. The determined locations corresponding to the retrieved device location addresses may be utilized by the wireless access point 200 to determine its own location. The determined location of the wireless access point 200 may be shared among a plurality of associated communication devices even without providing corresponding location information to the wireless access point 200.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for a method and system for a method and system for determining a location of an access point based on association of the access point with a communication device having a known location.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for communication, the method comprising:
performing by one or more processors and/or circuits in a communication device that has created an association with a wireless access point:
communicating location information of said communication device to said associated wireless access point, wherein said communicated location information of said communication device is utilized by said wireless access point to determine a location of said wireless access point.

2. The method according to claim 1, wherein said wireless access point is a WiFi access point or a Bluetooth access point.

3. The method according to claim 1, wherein said communicated location information of said communication device comprises a device location address and/or a Global navigation satellite-based systems (GNSS) position of said communication device.

4. The method according to claim 3, wherein said device address comprises a network accessible address, a device identifier, a telephone number, an IP address, a url and/or ftp location, an e-mail address, and/or an account number.

5. The method according to claim 3, wherein said wireless access point retrieves corresponding device location addresses and/or GNSS positions from a plurality of associated communication devices.

6. The method according to claim 5, wherein said location of said wireless access point is determined based on said retrieved device location addresses and/or GNSS positions from said plurality of associated communication devices.

7. The method according to claim 6, wherein said wireless access point determines locations corresponding to said retrieved device location addresses.

8. The method according to claim 7, wherein said location of said wireless access point is determined based on said determined locations corresponding to said retrieved device location addresses, and/or said retrieved GNSS positions.

9. The method according to claim 8, wherein said determined location of said wireless access point is shared among said plurality of associated communication devices.

10. The method according to claim 9, wherein said determined location of said wireless access point is shared with an associated communication device not providing corresponding location information to said wireless access point.

11. A system for communication, the system comprising:
one or more processors and/or circuits for use in a communication device that has created an association with a wireless access point, said one or more processors and/or circuits being operable to:
communicate location information of said communication device to said associated wireless access point, wherein said communicated location information of said communication device is utilized by said wireless access point to determine a location of said wireless access point.

12. The system according to claim 11, wherein said wireless access point is a WiFi access point or a Bluetooth access point.

13. The system according to claim 11, wherein said communicated location information of said communication device comprises a device location address and/or a Global navigation satellite-based systems (GNSS) position of said communication device.

14. The system according to claim 13, wherein said device address comprises a network accessible address, a device identifier, a telephone number, an IP address, a url and/or ftp location, an e-mail address, and/or an account number.

15. The system according to claim 13, wherein said wireless access point retrieves corresponding device location addresses and/or GNSS positions from a plurality of associated communication devices.
